Europäisches Patentamt

European Patent Office

Office européen des brevets

(11) Veröffentlichungsnummer: **0 361 076**
**A1**

(12) **EUROPÄISCHE PATENTANMELDUNG**

(21) Anmeldenummer: **89115503.8**

(22) Anmeldetag: **23.08.89**

(51) Int. Cl.⁵: **G05D 23/12**

(30) Priorität: **27.09.88 DE 3832737**

(43) Veröffentlichungstag der Anmeldung:
**04.04.90 Patentblatt 90/14**

(84) Benannte Vertragsstaaten:
**DE ES FR GB IT**

(71) Anmelder: **E.G.O. Italiana S.p.A.**
**Via per Cameri, 10**
**I-28100 Novara/Veveri(IT)**

(72) Erfinder: **Agradi, Gugliemo**
**Via Zanone 2**
**I - 28100 Novara(IT)**

(74) Vertreter: **Patentanwälte RUFF, BEIER und**
**SCHÖNDORF**
**Neckarstrasse 50**
**D-7000 Stuttgart 1(DE)**

(54) **Temperaturgesteuertes Ventil.**

(57) Bei einem Temperaturgesteuerten Ventil wirkt ein mit einem Temperaturfühler verbundenes Ausdehnungselement auf ein Betätigungselement eines Ventils ein. Der Durchflußquerschnitt des Ventils ist von der Temperatur abhängig, die der Temperaturfühler mißt. Das Ventil ist zur Steuerung des Durchlaßquerschnitts des Ventils in Abhängigkeit von einer Temperatur geeignet.

FIG.1

EP 0 361 076 A1

## Temperaturgesteuertes Ventil

Die Erfindung betrifft ein temperaturgesteuertes Ventil mit einem in einem Ventilgehäuse angeordneten Ventilsitz und einem diesem gegenüber bewegbaren Ventilkörper.

Bei elektrisch beheizten Dampferzeugern ist es üblich, bei Unterschreiten eines bestimmten Wasserstandes mit Hilfe eines Ventils solange Wasser einzulassen, bis der Wasserstand eine bestimmte Höhe überschreitet. Als Ventil wird dabei ein Magnetventil verwendet, das mit Hilfe eines elektrischen Schalters eingeschaltet wird. Dieser Schalter wird durch einen Ausdehnungsfühler angesteuert.

Ein hierfür verwendbarer Ausdehnungsfühler ist beispielsweise aus DE-PS 19 20 551 bekannt. Er enthält einen Temperaturfühler, der flüssigkeitsgefüllt ist und über ein Kapillarrohr mit einer Ausdehnungsdose verbunden ist. Die Formänderungen der Ausdehnungsdose, die aufgrund der Temperaturänderung auftreten, werden zum Öffnen und Schließen eines elektrischen Schalters verwendet.

Der Erfindung liegt die Aufgabe zugrunde, ein temperaturgesteuertes Ventil zu schaffen, das bei einem einfachen Aufbau ohne zusätzliche Elemente auf Temperaturänderungen reagieren kann.

Zur Lösung dieser Aufgabe ist erfindungsgemäß vorgesehen, daß der Ventilkörper über ein Ventilbetätigungselement mit einem Ausdehnungsglied eines einen Temperaturfühler aufweisenden Ausdehnungselements derart verbunden ist, daß sich der Durchflußquerschnitt des Ventils bei Änderung der von dem Temperaturfühler gemessenen Temperatur ebenfalls ändert.

Die Erfindung schafft also ein temperaturgesteuertes Ventil bei dem in Abhängigkeit von einer gemessenen Temperatur ein Strömungsquerschnitt geändert werden kann. Bei der Verwendung mit dem eingangs erwähnten Dampferzeuger läßt sich also das Nachfüllen des Wassers ohne zusätzliche Hilfsmittel direkt steuern, also ohne Verwendung eines zusätzlichen Magnetventils und einer Spannungsquelle hierfür.

Insbesondere kann vorgesehen, daß die Anordnung so getroffen ist, daß sich das Ventil bei steigender Temperatur öffnet.

In Weiterbildung kann vorgesehen sein, daß das Ventil in Schließrichtung vorbeaufschlagt ist. Falls das Ausdehnungselement einmal ausfallen sollte, schließt sich daher das Ventil automatisch, so daß das von der Erfindung vorgeschlagene Ventil eine Eigensicherung enthält.

Um einstellen zu können, bei welcher Ausdehnung bzw. Temperatur die Öffnung- bzw. Schließbewegung des Ventils beginnen soll, kann erfindungsgemäß vorgesehen sein, daß das Ausdehnungselement eine Justierschraube aufweist.

Es kann erfindungsgemäß vorgesehen sein, daß die Ankopplung zwischen dem Ausdehnungsglied und dem Ventilkörper durch eine Einstelleinrichtung veränderbar ist. Hiermit ist es möglich, durch einen einfachen Knebel oder auch eine kontinuierlich veränderbare Spindel eine Einstellung vorzunehmen, um beispielsweise unterschiedliche Temperaturen oder Betriebszustände einschalten zu können.

Insbesondere kann vorgesehen sein, daß der Temperaturfühler flüssigkeitsgefüllt ist und über ein Kapillarrohr mit dem als Ausdehnungsdose ausgebildeten Ausdehnungsglied verbunden ist. Derartige Temperaturfühler werden bei Elektrokochplatten häufig verwendet. Es lassen sich also bewährte und vorhandene Bauelemente unverändert verwenden.

In diesem Fall kann erfindungsgemäß vorgesehen sein, daß die Justierschraube und/oder die Einstelleinrichtung auf die Ausdehnungsdose einwirken.

Erfindungsgemäß kann vorgesehen sein, daß das Ausdehnungsglied direkt auf das Betätigungselement des Ventils einwirkt. So kann beispielsweise das Betätigungselement des Ventils als Stange ausgebildet sein, die im Ventil axial verschiebbar geführt ist und mit ihrem einen Ende an dem Ausdehnungsglied, beispielsweise der Ausdehnungsdose, anliegt. Es ist in Weiterbildung jedoch auch möglich, und wird von der Erfindung bevorzugt, daß das Ausdehnungsglied über eine Wippe oder eine Schaltwippe auf das Betätigungselement des Ventils einwirkt. Auf diese Weise lassen sich unterschiedliche Betätigungswege besonders einfach ausgleichen. Zusätzlich kann auf diese Weise dafür gesorgt werden, daß in besonders einfacher Weise das Ausdehnungsglied zusätzlich auf mindestens einen elektrischen Schalter einwirkt. Auf diese Weise wird es möglich, mit Hilfe des Temperaturfühlers nicht nur die Zufuhr von Flüssigkeit zu steuern, sondern in Abhängigkeit von bestimmten Temperaturen auch elektrische Einrichtungen einoder auszuschalten.

Erfindungsgemäß kann vorgesehen sein, daß der Temperaturfühler benachbart zu einer elektrischen Beheizung angeordnet ist. Dabei kann es sich sowohl um die sowieso vorhandene elektrische Beheizung eines beheizten Gerätes als auch um eine eigene, nur für den Temperaturfühler vorgesehene Beheizung handeln.

Insbesondere soll das von der Erfindung vorgeschlagene temperaturgesteuerte Ventil zur Regelung des Wasserstandes in einem Dampferzeuger verwendet werden. Hier schlägt die Erfindung vor, daß der Temperaturfühler in Höhe eines gewünschten Wasserstands des Behälters angeordnet wird und das Ventil in eine Versorgungsleitung für den Behälter eingeschaltet ist. Die Versorgungsleitung kann beispielsweise die Wasserleitung oder eine Verbindungsleitung mit einem Vorratsgefäß sein. Steht das Wasser in Höhe des gewünschten Wasserstandes bei dem Temperaturfühler, so wird dieser durch das Wasser gekühlt. Das Ausdehnungselement zieht sich zusammen und das Ventil schließt sich. Sinkt jedoch der Wasserstand ab, so heizt die Beheizung des Gerätes oder die eigene Beheizung den Temperaturfühler, so daß die in ihm enthaltene Flüssigkeit sich ausdehnt und das Ventil öffnet. Dadurch strömt Wasser ein und der Wasserstand steigt wieder zu der gewünschten Höhe an. Bei entsprechender Ausgestaltung des Ventils und des Ausdehnungselementes kann auf diese Weise eine Stetigregelung erreicht werden, so daß ständig ein geringer Wasserstrom in den Behälter fließt, der der Menge des durch Verdampfung entweichenden Wassers entspricht.

Es kann erfindungsgemäß vorgesehen sein, daß mehrere Temperaturfühler auf ein Ausdehnungsglied einwirken. Beispielsweise können an einer Ausdehnungsdose mehrere Kapillarrohre mit Temperaturfühlern angeschlossen sein. In diesem Fall tritt eine Durchschnitts bildung der Temperaturen auf. Auf diese Weise lassen sich einzelne ungenaue Meßergebnisse herausmitteln.

Wenn das Ventil an eine Versorgungsleitung angeschlossen ist, ist es erwünscht, daß kein Rückströmen der Flüssigkeit in den Versorgungsbereich erfolgt. Zu diesem Zweck kann erfindungsgemäß vorgesehen sein, daß das Ventil ein Rückschlagventil enthält.

Insbesondere kann das von der Erfindung vorgeschlagene temperaturgesteuerte Ventil zur Regelung des Wasserstandes in Behältern verwendet werden, beispielsweise Dampfgeneratoren, bei einer Biosauna, bei Klimageräten, bei Kaffee- oder Teemaschinen, bei Luftbefeuchtern, bei Inhalatoren und Wasserbädern. Ebenfalls kann das Ventil Anwendung finden bei einem Backofen, in dem ein herkömmliches Backen mit einem Wasserdampfbeheizen kombinierbar ist.

Es ist ebenfalls möglich, das von der Erfindung vorgeschlagene Ventil direkt als thermischen Schutz für die automatische Zufuhr von Kühlwasser zu verwenden, ohne daß eine zusätzliche Energiequelle wie beispielsweise eine Stromversorgung für ein Magnetventil erforderlich wäre.

Weitere Merkmale, Einzelheiten und Vorzüge der Erfindung ergeben sich aus der folgenden Beschreibung bevorzugter Ausführungsformen der Erfindung sowie anhand der Zeichnung. Hierbei zeigen:

Fig. 1 schematisch einen Schnitt durch eine erste Ausführungsform eines temperaturgesteuerten Ventils;

Fig. 2 schematisch die Ansicht einer zweiten Ausführungsform;

Fig. 3 die Anordnung eines Ventils zur Steuerung des Wasserstands.

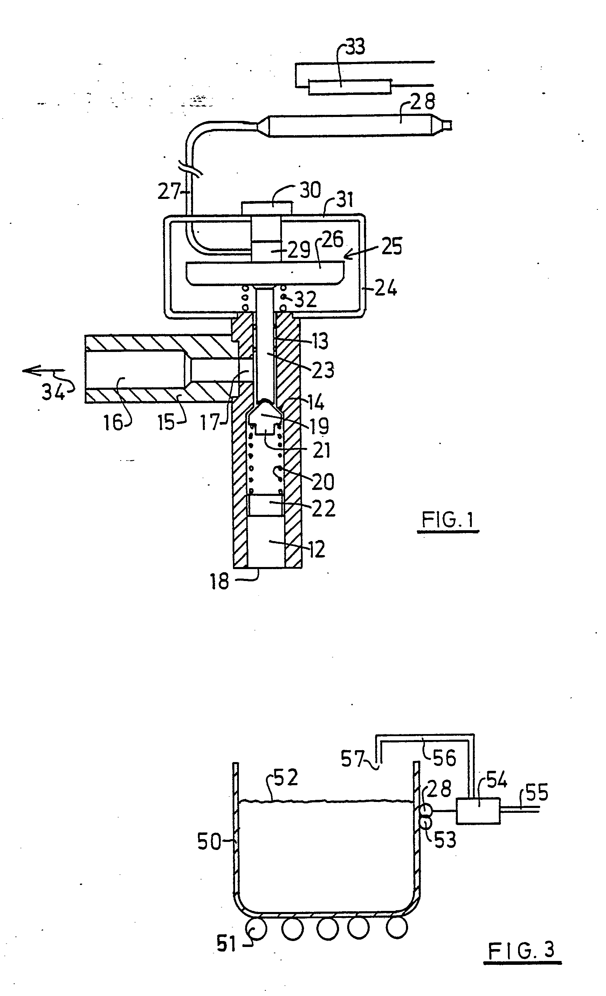

Das in Fig. 1 dargestellte Ventil enthält ein zylindrisches Ventilgehäuse 11, in das von der einen Seite, in Fig. 1 von unten, eine Bohrung 12 eingebracht ist. Diese Bohrung 12 verringert etwa in der Mitte des Ventilgehäuses ihren Durchmesser trichterförmig und geht in eine zweite zylindrische Bohrung 13 über. Diese Bohrung erstreckt sich bis zum oberen Ende des Ventilgehäuses. An dem Übergang zwischen den beiden Bohrungen unterschiedlichen Durchmessers wird ein kegelringförmiger Ventilsitz 14 gebildet.

In Fig. 1 oberhalb des Ventilsitzes 14 ist seitlich an das Ventilgehäuse 11 ein zylindrischer Ansatz 15 mit einer Axialbohrung 16 angesetzt. Die Axialbohrung 16 ist in Verlängerung einer radial verlaufenden Öffnung 17 des Ventilgehäuses 11 angeordnet, wobei die radial verlaufende Öffnung 17 auf der der Einlaßseite 18 des Ventilgehäuses abgewandte Seite des Ventilsitzes 14 angeordnet ist.

In der einlaßseitigen Bohrung 12 des Ventilgehäuses 11 ist ein Ventilkörper 19 eingesetzt, der mit dem Ventilsitz 14 zusammenwirkt. In seinem mit dem Ventilsitz 14 zusammenwirkenden Bereich ist der Ventilkörper 19 ebenfalls kegelförmig ausgebildet. Er wird von einer Schraubenfeder 20 auf den Ventilsitz 14 aufgedrückt. Die Schraubenfeder 20 stützt sich auf seiner dem Ventilsitz 14 abgewandten Seite ab. Hier weist der Ventilkörper 19 einen zylindrischen Ansatz 21 mit verringertem Durchmesser auf, der im Bereich seiner Außenseite eine Schulter bildet, an der sich die Schraubenfeder 20 abstützt. Mit ihrem entgegengesetzten Ende stützt sich die Schraubenfeder an einem Ring 22 ab, der in das einlaßseitige Ende der Bohrung 12 eingesetzt, beispielsweise eingeschraubt ist. Die Schraubenfeder 20 beaufschlagt den Ventil körper 19 in Schließstellung des Ventils.

In der Bohrung 13 stromab des Ventilsitzes 14 ist in Längsrichtung gleitend ein Ventilbetätigungselement 23 angeordnet, das aus dem Ventilgehäuse 11 nach oben herausragt. Zwischen dem Ventilbetätigungselement 23 und dem äußeren Ende der Bohrung 13 mit dem verringerten Durchmesser sind Dichtungen beispielsweise in Form von O-Ringen angeordnet, die ein Abdichten des Ventils an dieser Stelle gewährleisten.

An der der Einlaßseite 18 gegenüberliegenden Seite des Ventilgehäuses 11 ist ein Käfig 24 befestigt. Innerhalb dieses Käfigs 24 ist ein Ausdehnungsglied 25 eines Ausdehnungselementes angeordnet. Dieses Ausdehnungsglied 25 ist als Ausdehnungsdose 26 in Form einer flachen zylindrischen Scheibe ausgebildet. Die Ausdehnungsdose 26 ist über ein Kapillarrohr 27 mit einem Temperaturfühler 28 verbunden, wobei die Ausdehnungsdose 26, das Kapillarrohr 27 und der Temperaturfühler 28 mit einer Flüssigkeit gefüllt sind. Der Temperaturfühler 28 besitzt die Form eines langgestreckten Rohres, das an beiden Enden sich verjüngt.

Die Ausdehnungsdose 26 weist im Bereich ihrer einen Endfläche einen Ansatz 29 auf, der sich an einer Justierschraube 30 abstützt. Die Justierschraube 30 ist in einer Stirnseite 31 des Käfigs 24 eingeschraubt.

Auf der gegenüberliegenden Seite liegt die Stirnseite der Ausdehnungsdose 26 an dem äußeren Ende des Ventilbetätigungselementes 23 an. In der dargestellten Lage wird die Ausdehnungsdose 26 durch eine Schraubenfeder 32 gehalten, die sich um das äußere Ende des Ventilbetätigungselementes 23 herum zwischen der inneren Stirnseite des Käfigs 24 und der Stirnseite der Ausdehnungsdose 26 erstreckt.

Der Temperaturfühler 28 wird in der Nähe beispielsweise einer elektrischen Heizung angeordnet. Wird nun die elektrische Beheizung 33 von Strom durchflossen, so erwärmt sich der Temperaturfühler 28, so daß die in ihm enthaltene Flüssigkeit sich ausdehnt. Die Ausdehnung der Flüssigkeit führt zu einer Ausdehnung der Ausdehnungsdose 26, deren beide Stirnseiten membranartig ausgebildet sind. Mit anderen Worten führt die Ausdehnung der Flüssigkeit zu einem Dickerwerden der Ausdehnungsdose 26. Da in Fig. 1 nach oben hin sich die Ausdehnungsdose durch Anliegen an der Justierschraube 30 nicht verformen kann, drückt also die der Justierschraube 30 gegenüberliegende Stirnseite der Ausdehnungsdose 26 in Fig. 1 nach unten, mit anderen Worten auf das Ventilbetätigungselement 23. Das nach unten gedrückte Ventilbetätigungselement 23 drückt den Ventilkörper 19 von dem Ventilsitz 14 weg, so daß zwischen beiden ein ringförmiger Spalt entsteht. Wenn nun die Einlaßseite 18 des Ventilgehäuses 11 mit einer Wasserleitung oder einem Vorratsgefäß für Wasser in Verbindung steht, kann nun das Wasser an dem abgehobenen Ventilkörper 19 vorbei und durch die radiale Öffnung 17 in die Axialbohrung 16 des Ansatzes 15 fließen. Von dort aus fließt die Flüssigkeit in Richtung des Pfeiles 34 beispielsweise in das Innere eines Behälters und erhöht dort den Wasserstand in dem Behälter. Sobald die elektrische Beheizung 33 wieder abkühlt, zieht sich die Flüssigkeit in dem Temperaturfühler 28 wieder zusammen, so daß sich die Dicke der Ausdehnungsdose wieder verringert. Die Schraubenfeder 20 drückt daher den Ventilkörper 19 und das Ventilbetätigungselement 23 nach oben, soweit dies durch das Volumen der Flüssigkeit innerhalb der Ausdehnungsdose 26 ermöglicht ist. Dadurch kommt der Ventilkörper 19 wieder zur Anlage auf dem Ventilsitz 14 und das Ventil ist geschlossen.

Da die Axialbohrung 16 ebenfalls einen stufenförmig verringerten Durchmesser aufweist, könnte an dieser Stelle ein in gleicher Weise wie der Ventilkörper 19 aufgebauter Ventilkörper als Rückschlagventil angeordnet sein.

Das in Fig. 1 dargestellte Ventil ordnet also jeder Temperatur der elektrischen Beheizung 33 oberhalb einer bestimmten Ausgangstemperatur einen bestimmten Durchflußquerschnitt des Ventils zu. Es wird mit anderen Worten der Strömungsquerschnitt durch das Ventil in Abhängigkeit von der Temperatur der elektrischen Beheizung 33 gesteuert.

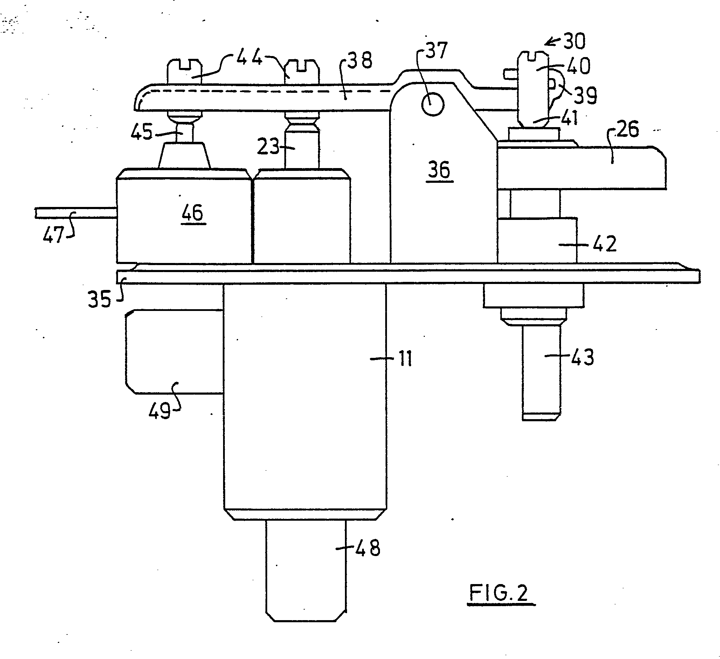

Fig. 2 zeigt den Aufbau einer geänderten Ausführungsform eines Ventils nach der Erfindung. Die Anordnung des Temperaturfühlers 28 und des Kapillarrohrs 27 ist im Prinzip genauso wie bei der Ausführungsform der Fig. 1, so daß diese Teile nicht nochmals dargestellt sind.

Das Ventil ist auf einer Grundplatte 35 aufgebaut. Die Grundplatte enthält auf ihrer einen Seite, der in Fig. 2 oberen Seite, zwei hochgebogene Lappen 36, an denen mit Hilfe einer Welle 37 ein Hebel 38 kippbar befestigt ist. Der Hebel ist beispielsweise aus einer Blechplatte gestanzt und an seinen Rändern zur Vergrösserung seiner Stabilität umgebogen.

Auf der einen Seite der Welle 37 ist auf der Platte 35 die Ausdehnungsdose 26 gehalten. Ihre eine Stirnseite liegt unter dem einen Ende 39 des Hebel 38, wobei in diesem Ende des Hebels die Justierschraube 30 eingeschraubt ist. Es handelt sich hierbei um eine Madenschraube 40. Diese ist durch eine mit dem Gewinde versehene Öffnung des Hebels 38 und zusätzlich durch eine Gewindeöffnung in dem umgeklappten Ende des Hebels geschraubt, wobei das umgeklappte Ende unter einer gewissen Spannung steht, so daß die beiden in axialer Richtung beabstandeten Gewindeöffnungen eine Art Selbsthemmung der Justierschraube 30 bewirken. Das untere Ende 41 der Madenschraube 40 wirkt auf die eine Stirnseite der Ausdehnungsdose 26 ein.

Auf der gegenüberliegenden Seite der Ausdehnungsdose 26 ist an der Platte 35 eine Schraubspindel 42 gehalten. Zu der Schraubspindel 42 gehört eine Welle 43, die auf beiden Seiten aus der Platte herausragt und in ihrem der Ausdehnungsdose 26 zugewandten Bereich an der Stirnseite der Ausdehnungsdose 26 anliegt. In dem gegenüberliegenden in Fig. 2 unterhalb der Platte 35 gelegenen Bereich weist die Welle 43 einen einseitig abgeflachten kreisrunden Querschnitt auf. Hier kann ein Knebel oder dergleichen aufgesetzt oder aufgeschraubt werden, mit dessen Hilfe die Welle 43 verdreht werden kann. Die Verdrehung der Welle führt zu ihrer axialen Verschiebung, so daß hierdurch die Ausdehnungsdose 26 mehr oder weniger stark beaufschlagt werden kann.

Auf der gegenüberliegenden Seite der Welle 37 weist der Hebel 38 zwei weitere Madenschrauben 44 mit unterschiedlichem Abstand von der Welle 37 auf. Die Madenschraube 44 mit dem kürzeren Abstand von der Welle 37 liegt auf dem Betätigungselement 23 des Ventils auf, während die Madenschraube 44 mit dem größeren Abstand auf dem Betätigungsknopf 45 eines elektrischen Schalters 46 aufliegt. Der Schalter 46 weist zwei Flachsteckzungen 47 auf, von denen in Fig. 2 nur eine zu sehen ist.

Das von der Madenschraube 44 betätigbare Ventil ist im Prinzip genauso aufgebaut wie das Ventil der Fig. 1, es enthält also einen Einlaßstutzen 48 zur Verbindung mit einer Wasserleitung oder einem Wasservorratsgefäß sowie einen Auslaßstutzen 49, der mit einer Leitung zu dem Behälter verbunden ist, in den die Flüssigkeit eingebracht werden soll. Die Wirkungsweise ist wieder die gleiche wie bei der Ausführungsform der Fig. 1, d. h. bei einer Ausdehnung der Flüssigkeit innerhalb des Temperaturfühlers verformt sich die Ausdehnungsdose 26 was zu einer Verkippung des Hebels 38 führt. Dadurch wird das Ventil über das Betätigungselement 23 geöffnet, so daß Flüssigkeit, beispielsweise Wasser, von dem Einlaßstutzen 48 in den Auslaßstutzen 49 fließen kann. Mit Hilfe der Schraubspindel 42 kann eine Einstellung erfolgen, so daß ein Bediener verschiedene Betriebsarten wählen kann. Die Schraubspindel 42 kann selbstverständlich auch eine Rasteinrichtung erhalten, so daß verschiedene Stellungen rastend festlegbar sind.

Bei der Ausführungsform der Fig. 2 wird nun beim Öffnen des Ventils noch zusätzlich der Schalter 46 betätigt. Dadurch kann beispielsweise eine Zusatzheizung ein- oder ausgeschaltet werden, oder auch eine Pumpe, die das Durchströmen des Ventils unterstützt. Durch die beiden Madenschrauben läßt sich sowohl das Ansprechen des Ventils als auch der Zeitpunkt, zu dem der Schalter 46 betätigt wird, einstellen.

Selbstverständlich ist es auch möglich, daß das Ventilgehäuse 11 mehrere Auslaßstutzen 49 enthalten kann.

Fig. 3 zeigt die Anordnung eines von der Erfindung vorgeschlagenen Ventils zur Niveauregulierung des Wasserstands in einem Behälter. Der Behälter 50, dessen Wand beispielsweise aus Metall besteht, wird an der Unterseite von Rohrheizkörpern 51 beheizt. Der Behälter selbst ist mit Wasser gefüllt. Im Bereich eines Sollwasserstands 52 ist an der Außenseite der Temperaturfühler 28 wärmegekoppelt an dem Behälter 50 befestigt. Da der Abstand zwischen dem Temperaturfühler 28 und den Rohrheizkörpern 51 zu groß ist, ist unmittelbar benachbart zu dem Temperaturfühler ein weiterer Heizwiderstand 53 angeordnet, der beispielsweise ständig beheizt wird. Die Leistung des Heizwiderstandes 53 kann sehr klein sein. Der Temperaturfühler 28 ist mit dem schematisch dargestellten Ventil 54 gekoppelt, dessen Einlaßseite 55 beispielsweise mit der Wasserleitung verbunden ist. Die Auslaßseite ist mit einer Leitung 56 verbunden, deren freies Ende 57 an einer Stelle endet, von wo aus das Wasser in den Behälter 50 fließen kann. Wenn das Wasser den Sollwasserstand 52 einnimmt, so kann die Temperatur des Temperaturfühlers 28 nicht wesentlich höher steigen als die Temperatur des Wassers, also rund 100 °C. Verdampft nun das Wasser und sinkt dadurch der Wasserstand, so kann es den Temperaturfühler 28 nicht mehr kühlen. Dieser heizt sich unter der Wirkung des Heizwiderstandes 53 auf. Dadurch steigt die Temperatur des Temperaturfühlers 28 an, die Flüssigkeit dehnt sich aus und in der beschriebenen Weise wird das Ventil 54 geöffnet. Bei geöffnetem Ventil fließt Wasser nach, das durch die Leitung 56 in den Behälter 50 fließt. Der Wasserstand steigt wieder, bis er einen Bereich erreicht, wo der Temperaturfühler wieder gekühlt wird. Bei entsprechender Trägheit des Systems kann das Ventil so gesteuert werden, daß kontinuierlich eine gleiche Menge Wasser in den Behälter einströmt wie verdampft.

Stellt man sich vor, daß der Behälter als Vorratsbehälter für Wasser gedacht ist, also nicht geheizt wird, und daß Wasser durch andere Maßnahmen entnommen wird, so läßt sich mit der dargestellten Einrichtung ebenfalls eine Niveauregulierung erreichen. In diesem Fall müßte allerdings beispielsweise die Leistung des Heizwiderstandes 53 anders ausgelegt werden, da in diesem Fall das Wasser wahrscheinlich eine andere Temperatur hätte.

**Ansprüche**

1. Temperaturgesteuertes Ventil mit einem in einem Ventilgehäuse (11) angeordneten Ventilsitz (14) und einem diesem gegenüber bewegbaren Ventilkörper (19), dadurch gekennzeichnet, daß der Ventilkörper (19) über ein Ventilbetätigungselement (23) mit einem Ausdehnungsglied (25) eines einen Temperaturfühler (28) aufweisenden Ausdehnungselements derart verbunden ist, daß der Durchflußquerschnitt des Ventils sich bei Änderung der von dem Temperaturfühler (28) gemessenen Temperatur ebenfalls ändert.

2. Ventil nach Anspruch 1, dadurch gekennzeichnet, daß bei steigender Temperatur das Ventil sich öffnet und/oder daß das Ventil in Schließrichtung vorbeaufschlagt ist.

3. Ventil nach einem der vorhergehenden Ansprüche, dadurch gekennzeichnet, daß das Ausdehnungselement ein Justierelement (30) aufweist und/oder die Ankopplung zwischen dem Ausdehnungsglied (25) und dem Ventilkörper (19) durch eine Einstelleinrichtung veränderbar ist.

4. Ventil nach einem der vorhergehenden Ansprüche, dadurch gekennzeichnet, daß der Temperaturfühler (28) flüssigkeitsgefüllt ist und über ein Kapillarrohr (27) mit dem als Ausdehnungsdose (26) ausgebildeten Ausdehnungsglied (25) verbunden ist, wobei insbesondere die Justiereinrichtung (30) und/oder die Einstelleinrichtung auf die Ausdehnungsdose (26) einwirken.

5. Ventil nach einem der vorhergehenden Ansprüche, dadurch gekennzeichnet, daß das Ausdehnungsglied (25) direkt oder insbesondere über eine Schaltwippe (38) auf das Betätigungselement (23) des Ventils einwirkt.

6. Ventil nach einem der vorhergehenden Ansprüche, dadurch gekennzeichnet, daß mehrere Temperaturfühler (28) auf das Ausdehnungsglied (25) einwirken und/oder das Ausdehnungsglied (25) zusätzlich auf mindestens einen elektrischen Schalter (46) einwirkt.

7. Ventil nach einem der vorhergehenden Ansprüche, dadurch gekennzeichnet, daß der Temperaturfühler (28) benachbart einer elektrischen Beheizung (51, 53) angeordnet ist.

8. Ventil nach Anspruch 7, dadurch gekennzeichnet, daß es sich dabei um die Beheizung (51) eines elektrisch beheizten Geräts handelt.

9. Ventil nach Anspruch 7 oder 8, dadurch gekennzeichnet, daß es sich um eine eigene dem Temperaturfühler (28) zugeordnete Beheizung (53) handelt.

10. Ventil nach einem der vorhergehenden Ansprüche, dadurch gekennzeichnet, daß der Temperaturfühler (28) in Höhe eines gewünschten Wasserstands (52) eines Behälters (50) angeordnet ist und das Ventil in einer Wasserversorgungsleitung für den Behälter (50) eingeschaltet ist.

11. Ventil nach einem der vorhergehenden Ansprüche, dadurch gekennzeichnet, daß es ein Rückschlagventil aufweist.

12. Verwendung eines temperaturgesteuerten Ventils, insbesondere eines Ventils nach einem der vorhergehenden Ansprüche, für die Niveauregulierung eines Wasserstands in einem Behälter.

13. Verwendung eines temperaturgesteuerten Ventils, insbesondere eines Ventils nach einem der Ansprüche 1 - 11, als thermischer Schutz für die automatische Zufuhr von Kühlwasser.

FIG.1

FIG. 3

FIG.2

| | | | |
|---|---|---|---|
| Europäisches Patentamt | **EUROPÄISCHER RECHERCHENBERICHT** | | Nummer der Anmeldung |
| | | | EP 89 11 5503 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 500 118 (H. KOCH) * Seite 1, Absatz 2 - Seite 2, Absatz 1; Seite 5, Absatz 3; Seite 6, Absatz 3 - Seite 7, Absatz 1; Seite 7, Absatz 3 - Seite 8, Absatz 1; Figur * | 1-4 | G 05 D 23/12 |
| Y | --- | 5-13 | |
| Y | DE-B-1 013 935 (LANDIS & GYR AG) * Spalte 2, Zeilen 24-54; Figur 1 * | 5 | |
| A | --- | 1-4 | |
| Y | GB-A-1 151 198 (P. CURTI) * Seite 1, Zeilen 38-56; Seite 2, Zeilen 6-66; Figur 1 * | 6 | |
| Y | --- DE-B-1 295 144 (ROWENTA METALLWARENFABRIK) * Spalte 1, Zeilen 6-36; Spalte 2, Zeile 34 - Spalte 3, Zeile 8; Figur * | 7-10,12 | |
| A | --- | 1,2 | **RECHERCHIERTE SACHGEBIETE (Int. Cl.5)** |
| Y | DE-A-2 841 206 (HANSA METALLWERKE) * Seite 4, Absätze 1-4 * | 11 | G 05 D 23/00 G 05 D 9/00 |
| Y | --- CH-A- 450 779 (DANFOSS) * Spalte 3, Zeilen 28-48; Figur 1 * | 13 | |
| A | --- | 1-5,10, 12 | |
| X | DE-A-2 219 883 (KOSMOS ARMATUREN- UND APPARATEBAU FRANZ BAUMEISTER) * Seite 7, Absatz 5 - Seite 8, Absatz 3; Figur 2 * --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 12-12-1989 | NETTESHEIM J.F. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | ----- | 4 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 12-12-1989 | NETTESHEIM J.F. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument

EPO FORM 1503 03.82 (P0403)